# NEUE EUROPÄISCHE PATENTSCHRIFT

(11) **EP 1 313 770 B2**
(45) Veröffentlichungstag und Bekanntmachung des Hinweises auf die Entscheidung über den Einspruch: **18.06.2008**
(45) Hinweis auf die Patenterteilung: 22.12.2004
(21) Anmeldenummer: 01985713.5
(22) Anmeldetag: 21.08.2001
(51) Int. Cl.: C08B 11/20, C08J 3/12, C08L 1/26, C08L 1/28

(54) **VERFAHREN ZUR PHYSIKALISCHEN MODIFIZIERUNG VON CELLULOSEETHERN**
METHOD FOR PHYSICALLY MODIFYING CELLULOSE ETHERS
PROCEDE DE MODIFICATION PHYSIQUE D'ETHERS DE CELLULOSE

(30) Priorität: 23.08.2000 DE 10041311
(43) Veröffentlichungstag der Anmeldung: 28.05.2003
(73) Patentinhaber: SE Tylose GmbH & Co.KG, 65203 Wiesbaden (DE)
(72) Erfinder: GIRG, Friedrich, 65510 Idstein (DE); FRIEDEL, Roland, 65399 Kiedrich (DE); HAMMES, Alf, 55252 Mainz-Kastel (DE)
(74) Vertreter: Plate, Jürgen
(86) Internationale Anmeldenummer: PCT/EP2001/009603
(87) Internationale Veröffentlichungsnummer: WO 2002/026835

(56) Entgegenhaltungen:
- DE-A- 3 910 742
- DE-A- 3 912 983
- FR-A- 1 487 506
- US-A- 4 853 437

## Beschreibung

Celluloseether finden aufgrund ihrer hervorragenden Eigenschaften und ihrer physiologischen Unbedenklichkeit vielseitig Anwendung, beispielsweise als Verdicker, Kleber, Binde- und Dispergiermittel, Wasserrückhaftemittel, Schutzkolloide, Stabilisatoren sowie als Suspendier-, Emulgier- und Filmbildemittel.

Es ist seit langem bekannt, dass die Kombination von Celluloseethem mit anderen Additiven, Zuschlagstoffen oder Hilfsmitteln in anwendungstechnischen Formulierungen Möglichkeiten eröffnet, in den verschiedensten Bereichen für spezifische Probleme optimierte Lösungsansätze zu erarbeiten.

So wird z. B. in der DE-A-39 13 518 beschrieben, dass die Verarbeitungseigenschaften von Zementmörteln verbessert werden, wenn synthetische Polymerverbindungen, insbesondere Polyacrylamide, zusammen mit Stärkeethem dem Celluloseether als pulverförmiges Gemisch zugegeben werden.

In der DE-A-39 20 025 wird den Celluloseethern eine Kombination aus pulverförmigen Verdickem, z. B. modifizierten Polyacrylamiden, und Verflüssigem zugesetzt, um einen ähnlichen Effekt zu erzielen.

In beiden Fällen wird jedoch das gebrauchsfertige Celluloseetherpulver entweder trocken dem zu modifizierenden Gemenge beigemengt oder mit anderen Additiven zu einem Additivgemisch vorgemischt und dann dem zu modifizierenden Gemenge direkt vor der Verarbeitung hinzugefügt.

Die chemische Umsetzung von Celluloseethern mit Polyacrylamiden und Vernetzerkomponenten zu chemisch modifizierten Celluloseethem mit verbesserten Verarbeitungseigenschaften wird in der DE-A-33 39 860 beschrieben. Diese Verbindungen können vorteilhaft in asbestfreien Fliesenkleber-Formulierungen eingesetzt werden.

Ein anderer Ansatz zu einer eher "physikalischen" Modifizierung von Celluloseethern wird in der DE-A-39 12 983 beschrieben. Dort wird ein feinkörniges Trockenpulver auf der Basis einer Mischung nicht-ionogener Celluloseether mit Redispersionspolymeren, z. B. auf der Basis von Polyvinylacetat, erzeugt. Dies geschieht durch Mischen von im wesentlichen gleichen Anteilen der wässrigen Dispersionen von Redispersionspulvem mit Celluloseethern bei einer Temperatur oberhalb des Flockpunktes der Celluloseether sowie einer nachgeschalteten Sprühtrocknung der resultierenden Dispersion (Feststoffgehalt ca. 15 bis 60 %) bei erhöhter Temperatur. Es werden feinkörnige Trockenpulver erhalten, deren überwiegender Anteil Kerne der nichtionogenen Celluloseether aufweist, die von einer Hülle des Redispersionspolymeren umgeben und mit dieser haftfest verbunden sind. Ein auf diese Weise hergestelltes Trockenpulver hat gegenüber einer nachträglich hergestellten Pulvermischung der Einzelkomponenten den Vorteil, dass es sich nicht entmischt und staub- sowie klumpenfrei in Wasser einrühren lässt. Die Sprühtrocknung von Celluloseethern bei Temperaturen oberhalb des Flockpunktes ist jedoch wesentlich zeitaufwendiger, arbeits- und maschinenintensiver sowie aufgrund des hohen Energieverbrauches wirtschaftlich aufwendiger als die gängige Trocknung und Mahlung sowie nachfolgende Abmischung der Fertigpulver.

Aufgabe der vorliegenden Erfindung war daher die Entwicklung eines Verfahrens zur Modifizierung von Celluloseethern, durch welches Celluloseether mit verbesserten Verarbeitungseigenschaften erhalten werden, die bei der Anwendung im Vergleich zu nicht modifizierten Celluloseethern Vorteile bieten. Dies sind insbesondere eine verbesserte Standfestigkeit sowie eine leichtere Verarbeitung bei der Anwendung in Spritzputzen.

Diese Aufgabe wird gelöst durch ein Verfahren zur "physikalischen" Modifizierung von Celluloseethem, das dadurch gekennzeichnet ist, dass ein Celluloseether mit einem Feuchtigkeitsgehalt von 30 bis 75 %, bevorzugt von 40 bis 70%, intensiv mit 0,1 bis 5 Gew.-%, bezogen auf den trockenen Celluloseether, eines Additivs oder eines Additivgemisches Form einer wässrigen oder organischen Suspension oder Lösung bei Temperaturen von 20 bis 100°C, vorzugsweise 20 bis 60°C, vermischt und die erhaltene Mischung anschließend getrocknet wird.

Als Celluloseether können alle bekannten Celluloseether, wie zum Beispiel Methylcellulose, Ethylcellulose, Propylcellulose, Butylcellulose, Carboxymethylcellulose, Hydroxyethylcellulose aber auch binäre Mischether, wie zum Beispiel Methylhydroxyethylcellulose, Methylhydroxypropylcellulose, Ethylhydroxyethylcellulose oder ternäre Mischether eingesetzt werden.

Bei der Angabe der Menge des Additivs bzw. Additivgemisches bleibt dabei der Gehalt an Wasser bzw. organischem Lösungsmittel außer Betracht. Vielmehr handelt es sich bei der Mengenangabe im allgemeinen um den Wert, der bereits um die Feuchte des Additivs bzw. des Additivgemisches korrigiert worden ist. Bevorzugt werden 0,1 bis 2 Gew.-% eines Additivs oder eines Additivgemisches, bezogen auf den trockenen Celluloseether, zugesetzt.

Als Additive werden natürliche sowie synthetische Polymere auf der Basis von Homo- bzw. Copolymeren auf der Basis von Polyvinylacetat, Vinylacetat-Maleinat-Copolymere, Ethylen-Vinylacetat-Copolymere, Polyurethane. sowie Gemische derselben eingesetzt.

In einer bevorzugten Ausführungsform wird das Additiv bzw. das Additivgemisch in Form einer wässrigen Suspension oder Lösung zugegeben.

In einer weiteren Ausführungsform kann der wasserfeuchte Celluloseether mit einem Feuchtigkeitsgehalt von 30 bis 75 % zunächst in einem organischen Lösungsmittel suspendiert werden bevor er mit einer wässrigen oder organischen Suspension oder Lösung eines Additivs oder eines Additivgemisches bei Temperaturen von 20 bis 60°C vermischt wird. Das organische Suspensionsmittel kann dann mit einer geeigneten Vorrichtung vor der Trocknung abgetrennt werden.

Zur Herstellung einer Suspension des Celluloseethers in einem organischen Lösungsmittel eignen sich vorzugsweise Aceton, Diethylether und dessen höhere Homologe, Dimethoxyethan und dessen höhere Homologe, aliphatische und cyclische Kohlenwasserstoffe sowie aromatische Verbindungen.

Die an die Mischung bzw. an die Abtrennung des organischen Suspensionsmittels sich anschließende Trocknung kann dann in einem ein- oder mehrstufigen Verfahren durchgeführt werden. Gleichzeitig mit der Trocknung oder daran anschließend kann die Mischung einer Mahlung unterworfen werden. Dabei können die Mahlparameter entsprechend der gewünschten Korngrößenverteilung eingestellt werden. Zur Trocknung bzw. Mahlung der Mischung können dabei alle dem Fachmann bekannten Vorrichtungen eingesetzt werden. Bevorzugt ist jedoch die Verwendung von Vorrichtungen zur Mahltrocknung, mit denen die Mischung in einem Schritt gleichzeitig gemahlen und getrocknet werden kann.

Die Temperatur, der der modifizierte Celluloseether im Verlauf der Trocknung und/oder Mahlung unterworfen wird, beträgt vorzugsweise mindestens 60°C, besonders bevorzugt 80 bis 160°C.

Überraschenderweise wurde gefunden, dass bei der intensiven Einarbeitung von Additiven oder Additivgemischen in Celluloseether schon geringe Mengen von maximal 5 Gew.-%, bezogen auf den zu modifizierenden Celluloseether, ausreichen, um zu Celluloseethern zu führen, die in anwendungstechnisch relevanten Formulierungen zu deutlich verbesserten Eigenschaften führen. Diese verbesserten Eigenschaften treten bei der nach dem Stand der Technik üblichen Trockenmischung pulverförmiger Einzelkomponenten entweder gar nicht oder nur bei wesentlich höherer Menge an Additiv auf.

Die eingesetzte Additivmenge von maximal 5 Gew.-% reicht im Gegensatz zu der Mischung der DE-A-39 12 983 nicht aus, um den überwiegenden Anteil des Celluloseethers mit einer polymeren Hülle zu umschließen. Trotzdem gelingt es erfindungsgemäß, das Polymer durch intensive Vermischung gleichmäßig in den Celluloseether einzuarbeiten, und nicht nur oberflächlich aufzuziehen.

Die Erfindung wird im folgenden anhand von Ausführungsbeispielen näher beschrieben, ohne dadurch jedoch beschränkt zu werden.

Die Viskositäten werden an 1,9 %igen Lösungen, bezogen auf den Celluloseether, in einem Höppler-Kugelfallviskosimeter bestimmt, die Gehalte der Substituenten (OCH₃, OC₂H₄) durch Zeisel-Aufschluss.

Erfindungsgemäße Modifizierung von gemäß dem Stand der Technik hergestellten Celluloseethern:

### Beispiel 1a (Vergleichsbeispiel)

210 g einer feuchten Methylhydroxyethylcellulose (Trockengehalt 31,5 %, ca. 60000 mPas, 26 % OCH₃, 4,5 % OC₂H₄) werden in einem Knetaggregat der Firma Draiswerke GmbH (Mannheim, Waldhof) bei 60 bis 70°C für 3 Stunden intensiv geknetet. Danach wird das Material bei 70°C getrocknet und auf einer handelsüblichen Mühle unter Wahl geeigneter Mahlparameter so zerkleinert, dass sich folgende Komgrößenverteilung ergibt:

| | |
|---|---|
| 40 bis 60 % | < 63 µm |
| > 70 % | < 100 µm |
| > 90 % | < 125 µm |

### Beispiel 1b (erfindungsgemäß)

210 g einer feuchten Methylhydroxyethylcellulose (Ausgangsmaterial aus Beispiel 1a) werden in einem Knetaggregat bei 60 bis 70°C mit 1,32 g einer wässrigen Polymerdispersion eines Polyvinylacetat-Ethylen Copolymerisates, mit einem Feststoffgehalt von 50 %, hergestellt durch Redispergieren eines Dispersionspulvers (®Mowilith DM 1140 P) der Clariant GmbH (1 Gew.-% bezogen auf den Celluloseether, absolut trocken) für 3 Stunden intensiv vermischt. Danach wird der hergestellte Compound bei 70°C getrocknet und auf einer handelsüblichen Mühle unter Wahl geeigneter Mahlparameter, wie oben beschrieben, zerkleinert.

### Beispiel 1c (Vergleichsbeispiel)

210 g einer feuchten Methylhydroxyethylcellulose (Ausgangsmaterial aus Beispiel 1a) werden in einem Knetaggregat bei 60 bis 70°C mit 6,6 g einer wässrigen Polymerdispersion aus Beispiel 1b (5 Gew.-% bezogen auf den Celluloseether, absolut trocken) für 3 Stunden intensiv vermischt. Danach wird der hergestellte Compound bei 70°C getrocknet und auf einer handelsüblichen Mühle unter Wahl geeigneter Mahlparameter, wie oben beschrieben, zerkleinert.

### Beispiel 2a (Vergleichsbeispiel)

210 g einer feuchten Methylhydroxyethylcellulose (Trockengehalt 53 %, 250000 mPas, 28 % OCH₃, 5 % OC₂H₄) werden in einem Knetaggregat der Firma Draiswerke GmbH bei 60 bis 70°C für 3 Stunden intensiv geknetet. Danach wird das Material bei 70°C getrocknet und auf einer handelsüblichen Mühle unter Wahl geeigneter Mahlparameter, wie oben beschrieben, zerkleinert.

### Beispiel 2b (erfindungsgemäß)

210 g einer feuchten Methylhydroxyethylcellulose (Ausgangsmaterial aus Beispiel 2a) werden in einem Knetaggregat bei 60 bis 70°C mit 2,64 g einer wässrigen Polymerdispersion aus Beispiel 1b (1,2 Gew.-% bezogen auf den Celluloseether, absolut trocken) für 3 Stunden intensiv vermischt. Danach wird der hergestellte Compound bei 70°C getrocknet und auf einer handelsüblichen Mühle unter Wahl geeigneter Mahlparameter, wie oben beschrieben, zerkleinert.

### Beispiel 2c (Vergleichsbeispiel)

210 g einer feuchten Methylhydroxyethylcellulose (Ausgangsmaterial aus Beispiel 2a) werden in einem Knetaggregat bei 60 bis 70°C mit 6,6 g einer wässrigen Polymerdispersion aus Beispiel 1b (3 Gew.-% bezogen auf den Celluloseether, absolut trocken) für 3 Stunden intensiv vermischt. Danach wird der hergestellte Compound bei 70°C getrocknet und auf einer handelsüblichen Mühle unter Wahl geeigneter Mahlparameter, wie oben beschrieben, zerkleinert.

### Beispiel 3a (Vergleichsbeispiel)

2600 g einer feuchten Methylhydroxyethylcellulose (Trockengehalt 23 %, 65000 mPas, 27 % OCH₃, 4 % OC₂H₄) werden in einem Knetaggregat bei Raumtemperatur für 30 Minuten intensiv geknetet. Danach wird das Material auf einer handelsüblichen, beheizten Mühle bei einer Mühlentemperatur von ca. 70 bis 90°C unter gleichzeitiger Trocknung gemahlen, wobei die Mahlparameter so gewählt werden, dass die oben beschriebene Komgrößenverteilung erhalten wird.

### Beispiel 3b (Vergleichsbeispiel)

2600 g einer feuchten Methylhydroxyethylcellulose (Ausgangsmaterial aus Beispiel 3a) werden in einem Knetaggregat bei Raumtemperatur mit 10 g einer wässrigen Polymerdispersion eines Polyvinylacetat-Ethylen-Copolymerisates, mit einem Feststoffgehalt von 60 %, hergestellt durch Redispergieren eines Dispersionspulvers (®Mowilith DM 1140 P) der Clariant GmbH (1 Gew.-% bezogen auf den Celluloseether, absolut trocken) für 30 Minuten intensiv vermischt.
Danach wird der hergestellte Compound auf einer handelsüblichen, beheizten Mühle bei einer Mühlentemperatur von ca. 70 bis 90°C unter gleichzeitiger Trocknung gemahlen, wobei die Mahlparameter so gewählt werden, dass die oben beschriebene Komgrößenverteilung erhalten wird.

### Beispiel 3c (Vergleichsbeispiel)

2600 g einer feuchten Methylhydroxyethylcellulose (Ausgangsmaterial aus Beispiel 3a) werden in einem Knetaggregat bei Raumtemperatur mit 30 g einer wässrigen Polymerdispersion aus Beispiel 3b (3 Gew.-% bezogen auf den Celluloseether, absolut trocken) für 30 Minuten intensiv vermischt. Danach wird der hergestellte Compound auf einer handelsüblichen, beheizten Mühle bei einer Mühlentemperatur von ca. 70 bis 90°C unter gleichzeitiger Trocknung gemahlen, wobei die Mahlparameter so gewählt werden, dass die oben beschriebene Komgrößenverteilung erhalten wird.

Im Folgenden wird die anwendungstechnische Austestung der hergestellten modifizierten Celluloseether beschrieben.

### Beispiele 4 bis 9

Die modifizierten Celluloseether der Beispiele 1b und 1 c werden im Laborversuch in einer exemplarischen Gipsputz-Mischung gegen das nicht modifizierte Material des Vergleichsbeispiels 1a ausgetestet.

Wie der Tabelle 1 zu entnehmen ist, besitzen die mit der Polymerdispersion im Rahmen des erfindungsgemäßen Verfahrens modifizierten Celluloseether wegen einer verzögerten Verdickungswirkung und einem leicht plastifizierenden Verhalten insbesondere die gewünschte Eigenschaft einer leichteren Verarbeitbarkeit, was sowohl die Bearbeitungszeit als auch den Bearbeitungsaufwand reduziert.

### Beispiele 10 bis 15

Die modifizierten Celluloseether der Beispiele 2b und 2c werden in einer exemplarischen Gipsputz-Mischung gegen das nicht modifizierte Material des Vergleichsbeispiels 2a ausgetestet.

Wie Tabelle 2 zeigt, lassen sich auch bei einer höheren Viskositätsstufe des Celluloseethers im Vergleich zu dem in den Beispielen 1a, 1b sowie 1 c verwendeten Material im Laborversuch die positiven anwendungstechnischen Eigenschaften beobachten.

Um die Ergebnisse in größerem Maßstab zu reproduzieren und Unterschiede deutlicher herauszuarbeiten, werden zusätzlich zu den Laborversuchen Spritzversuche durchgeführt. Dazu werden die modifizierten Celluloseether der Beispiele 3b und 3c in einer exemplarischen Gipsputz-Mischung gegen das nicht modifizierte Material des Vergleichsbeispiels 3a ausgetestet (Beispiele 16 bis 22).

### Beispiele 16 bis 18

Zu einer Grundmischung 1 werden jeweils 0,30 Gew.-% MHEC der Beispiele 3a, 3b und 3c, bezogen auf die Grundmischung, zugesetzt. Die MHEC besteht jedoch aus einer Vormischung der Celluloseether der Beispiele 3a, 3b und 3c, zusätzlich modifiziert mit jeweils 1,5 Gew.-% Co-Verdicker, bezogen auf den Celluloseether. Die Vormischung aus Celluloseether und Co-Verdicker wird durch intensive Vermischung der pulverförmigen Komponenten hergestellt.

### Beispiele 19 bis 22

Zu einer Grundmischung 2 werden jeweils 0,30 Gew.-% MHEC, bezogen auf die Grundmischung zugesetzt, und zwar bestehend aus einer Vormischung aus dem Material aus Beispiel 3a (Beispiel 19, 21, 22) sowie Beispiel 3b (Beispiel 20), die 1,5 Gew.-% Co-Verdicker, bezogen auf den Celluloseether, enthalten.

In den Beispielen 21 und 22 wird die Grundmischung neben der Vormischung aus Celluloseether des Beispiels 3a und Co-Verdicker zusätzlich mit umgerechnet 1 % (Beispiel 21) und 33 % (Beispiel 22), bezogen auf MHEC, trockenem Dispersionspulver vermischt. Die eingesetzte Menge beträgt, bezogen auf die Grundmischung, also ca. 0,003 (Beispiel 21) bzw. 0,1 (Beispiel 22) Gew.-%.

Die Herstellung der Dispersionspulver der Beispiele 21 und 22 erfolgt dadurch, dass die wässrigen Polymerdispersionen der Beispiele 3b und 3c nach einem gängigen Verfahren sprühgetrocknet werden, so dass ein Dispersionspulver mit einem Feuchtigkeitsgehalt von unter 5 % erhalten wird.

Wie aus den Tabellen 3 und 4 entnommen werden kann, ist das Spritzbild eines Spritzputzes mit dem modifizierten Celluloseether des Beispiels 3b (Beispiele 17 und 20) gleichmäßiger als das eines Spritzputzes mit dem unmodifizierten Celluloseether des Vergleichsbeispieles 3a (Beispiele 16 und 19). Darüber hinaus ist das 1. und 2. Verziehen des Putzes bei geringerem Kraftaufwand zu einer gleichmäßigeren Oberfläche mit teilweise geringerer Neigung zu Knötchenbildung möglich.

Der Spritzputz, enthaltend den modifizierten Celluloseether des Beispiels 3c, der mit 3 Gew.-% Dispersion modifiziert ist (Beispiel 18), zeigt ebenfalls ein verbessertes Endbearbeitungsverhalten. Das Spritzbild dieser Spritzputzmischung ist jedoch aufgrund geringerer Konsistenzentwicklung zu Beginn etwas ungleichmäßiger als das des Spritzputzes des Beispiels 17, der ebenfalls den Celluloseethers des Beispiels 3c enthält, der jedoch nur mit einem Gewichtsprozent Dispersion modifiziert ist.

Die Spritzputzmischung des Beispiels 21, der das sprühgetrocknete, pulverförmige Dispersionspulver in einer zu Beispiel 20 vergleichbaren Menge zugesetzt wurde
(1 Gew.-% Dispersionspulver, bezogen auf den Celluloseether), zeigt im Vergleich zum Spritzputz des Beispiels 19, der keinen erfindungsgemäß modifizierten Celluloseether enthält, keine verbesserten Verarbeitungseigenschaften.
Wie Beispiel 22 zeigt, bewirkt erst der Zusatz einer größeren Menge Dispersionspulver eine leichte Verbesserung beim 1. Verziehen des Spritzputzes. Allerdings werden die Verarbeitungseigenschaften gegenüber der Spritzputzmischung des Beispiels 20, die den modifizierten Celluloseether des Beispiels 3b enthält, trotz erhöhten Dispersionspulver-Einsatzes nicht erreicht.

**Tabelle 1**

| Beispiel Nr. | 4* | 5 | 6* | 7* | 8 | 9* |
|---|---|---|---|---|---|---|
| Zusammensetzung | GT | GT | GT | GT | GT | GT |
| Gipsputz-Mischung (ohne MHEC) | 1000 | 1000 | 1000 | 1000 | 1000 | 1000 |
| MHEC Beispiel 1a (Vergleichsbsp.) | 2,5 | - | - | 2,425 | - | - |
| MHEC Beispiel 1b (1 % Dispersion) | - | 2,5 | - | - | 2,425 | - |
| MHEC Beispiel 1c (Vergleichsbeispiel) (5 % Dispersion) | - | - | 2,5 | - | - | 2,425 |
| Co-Verdicker | - | - | - | 0,075 | 0,075 | 0,075 |
| Wasser¹⁾ | 630 | 630 | 630 | 680 | 680 | 680 |
| Eigenschaften: | ohne Co-Verdicker | | | mit Co-Verdicker | | |
| Konsistenz | gut | verzögerte Verdickung, leicht plastifizierend | verzögerte Verdickung, etwas stärker plastifizierend als 5 | sehr gut | verzögerte Verdickung, leicht plastifizierend | verzögerte Verdickung, etwas stärker plastifizierend als 8 |
| Verarbeitung | befriedigend | leichter & besser als 4 | leichter & besser als 4 | gut | leichter & besser als 7 | leichter & besser als 7 |
| Standvermögen | befriedigend | befriedigend | befriedigend | gut | gut | gut |
| Klumpenbildung | ja | ja | ja | gering | gering | gering |

| | | | | | | |
|---|---|---|---|---|---|---|
| ¹⁾ Anrühren des Mörtels: 45 s manuelles Rühren GT: Gewichtsteile MHEC: Methylhydroxyethylcellulose * Vergleichsbeispiel | | | | | | |

**Tabelle 2:**

| Beispiel Nr. | 10* | 11 | 12* | 13* | 14 | 15* |
|---|---|---|---|---|---|---|
| Zusammensetzung | GT | GT | GT | GT | GT | GT |
| Gipsputz-Mischung (ohne MHEC) | 1000 | 1000 | 1000 | 1000 | 1000 | 1000 |
| MHEC Beispiel 2a (Vergleichsbeispiel) | 2,5 | - | - | 2,425 | - | - |
| MHEC Beispiel 2b (1,2% Dispersion) | - | 2,5 | - | - | 2,425 | - |
| MHEC Beispiel 2c (Vergleichsbeispiel) (3% Dispersion) | - | - | 2,5 | - | - | 2,425 |
| Co-Verdicker | - | - | - | 0,075 | 0,075 | 0,075. |
| Wasser¹⁾ | 620 | 620 | 620 | 660 | 660 | 660 |
| Eigenschaften: | ohne Co-Verdicker | | | mit.Co-Verdicker | | |
| Konsistenz | gut | verzögerte Verdickung, plastifizierend | verzögerte Verdickung, plastifizierend | sehr gut | verzögerte Verdickung, etwas stärker plastifizierend als 13 | verzögerte Verdickung, etwas stärker plastifizierend als 13 |
| Verarbeitung | befriedigend | leichter & besser als 10 | leichter & besser als 10 | gut | leichter & besser als 13 | leichter & besser als 13 |
| Standvermögen | befriedigend | befriedigend | befriedigend | gut | gut | gut |
| Klumpenbildung | ja | ja | ja | gering | gering | gering |

| | | | | | | |
|---|---|---|---|---|---|---|
| ¹⁾ Anrühren des Mörtels: 45 s manuelles Rühren * Vergleichsbeispiel | | | | | | |

**Tabelle 3**

| Beispiel Nr. | | 16* | 17* | 18* |
|---|---|---|---|---|
| Grundmischung 1¹⁾ | Zeit [min] | MHEC Beispiel 3a (Vergleichsbeispiel) +1,5 % Co-Verdicker | MHEC Beispiel 3b (Vergleichsbeispiel) (1% Dispersion) + 1,5 % Co-verdicker | MHEC Beispiel 3c (Vergleichsbeispiel) (3% Dispersion) +1,5% Co-verdicker |
| Spritzen²⁾ | 0 | gutes Spritzbild, läuft gut ineinander | gleichmäßigeres Spritzbild, leichter als 16 | etwas flüssiger als 16 und 17, Spritzbild etwas ungleichmäßiger |
| 1. Verziehen | +5 | klebrig, schwer, Knötchen | gleichmäßiges Verziehen, einige Knötchen | klebriger, aber lässt sich besser stellen als 17 |
| 2. Verziehen | + 81 | schwer | leichter als 16, Fläche lässt sich besser stellen | etwas schwerer als 17 |
| Schneiden | + 32 | etwas schwer | gut, lässt sich gut steilen | leichter als 16, aber schwerer als 17 |
| Filzen | + 19 | in Ordnung, Schmand in Ordnung | in Ordnung, Schmand in Ordnung | in Ordnung, Schmand in Ordnung |
| Glätten | + 20 | gut | gut, viel leichter als 18 | vergleichbar 16, einige ungelöste Partikel |
| Gesamt-Beurteilung | 157 | gut | Deutlich besser als 16 | etwas besser als 16 |

| | | | | |
|---|---|---|---|---|
| ¹⁾ Gipsputz-Mischung (ohne MHEC) mit LP-Mittel und Stärkeether ²⁾ Putzmaschine: PFT G4 Schlauchlänge: 15 m; Untergrund: Porenbeton 1 : 3 vorbehandelt mit Tiefengrund LF Wasserdurchfluss: 800 bis 820 l/h; Förderdruck: 10 bis 11 bar, Ausbreitmaß: 170 bis 180 mm * Vergleichsbeispiel | | | | |

**Tabelle 4**

| Beispiel Nr. | | 19 * | 20* | 21* | 22* |
|---|---|---|---|---|---|
| Grundmischung 2¹⁾ | Zeit [min] | MHEC Beispiel 3a* (ohne Dispersion) +1.5% Co-Verdicker | MHEC Beispiel 3b* (1% Dispersion) + 1,5 % Co-Verdicker | MHEC Beispiel 3a*(ohne Dispersion) + 1,5 % Co-Verdicker + 1 % Dispersionspulver | MHEC Beispiel 3a*(ohne Dispersion) + 1,5 % Co-verdicker + 33 % Dispersionspulver |
| Spritzen²⁾ | 0 | etwas klebrig, läuft nicht gut ineinander | gutes Spritzbild, sehr gleichmäßig | etwas klebrig, läuft nicht gut ineinander | etwas besser als 19 und 21 |
| 1. Verziehen | + 5 | schwer und kompakt | deutlich leichter als 19 | schwer und kompakt | etwas leichter als 19 und 21, aber deutlich schwerer als 20 |
| 2. Verziehen | + 80 | kompakt, lässt sich gut stellen | besser als 19, lässt sich gut stellen | kompakt, lässt sich gut stellen | etwas kompakt, lässt sich gut stellen |
| Schneiden | + 30 | lässt sich gut schneiden | lässt sich gut schneiden | lässt sich gut schneiden | lässt sich gut schneiden |
| Filzen | + 20 | gut, Schmand in Ordnung | gut, Schmand in Ordnung | gut, Schmand in Ordnung | gut, Schmand in Ordnung |
| Glätten | + 20 | gut | gut | gut | gut |
| Gesamt-Beurteilung | 155 | mangelhaft | gut, deutlich besser als 19 | mangelhaft, analog 19 | befriedigend, etwas besser als 19, aber schlechter als 20 |

| | | | | | |
|---|---|---|---|---|---|
| ¹⁾ Gipsputz-Mischung (ohne MHEC) mit LP-Mittel und Stärkeether ²⁾ Putzmaschine: PFT.G4 / Schlauchlänge: 15 m Untergrund: Porenbeton 1 : 3 vorbehandelt mit Tiefengrund LF Wasserdurchfluss: 780 bis 800 l/h: Förderdruck: 11 bis 13 bar, Ausbreitmaß: 160 bis 190 mm *Vergleichsbeispiel | | | | | |

## Patentansprüche

1. Verfahren zur physikalischen Modifizierung von Celluloseethern, **dadurch gekennzeichnet, dass** ein Celluloseether mit einem Feuchtigkeitsgehalt von 30 bis 75 % intensiv mit 0,1 bis 2 Gew.-%, bezogen auf den trockenen Celluloseether, eines Additivs oder eines Additivgemisches in Form einer wässrigen oder organischen Suspension oder Lösung bei Temperaturen von 20 bis 100 °C vermischt und die erhaltene Mischung anschließend getrocknet wird, wobei als Additiv natürliche sowie synthetische Polymere auf der Basis von Homo- oder Copolymeren auf der Basis von Polyvinylacetat, Vinylacetat-Maleinat-Copolymere, Ethylen-Vinylacetat-Copolymere, Polyurethane sowie Gemische derselben eingesetzt werden.

2. Verfahren gemäß Anspruch 1, **dadurch gekennzeichnet, dass** als Celluloseether Methylcellulose, Ethylcellulose, Propylcellulose, Butylcellulose, Carboxymethylcellulose, Hydroxyethylcellulose, Methylhydroxyethylcellulose, Methylhydroxypropylcellulose und/oder Ethylhydroxyethylcellulose eingesetzt wird.

3. Verfahren gemäß mindestens einem der Ansprüche 1 bis 2, **dadurch gekennzeichnet, dass** der wasserfeuchte Celluloseether mit einem Feuchtigkeitsgehalt von 30 bis 75 % zunächst in einem organischen Lösungsmittel suspendiert wird, bevor er mit einer wässrigen oder organischen Suspension oder Lösung eines Additivs oder eines Additivgemisches bei Temperaturen von 20 bis 60 °C vermischt wird, und das organische Suspensionsmittel vor der Trocknung abgetrennt wird.

4. Verfahren gemäß Anspruch 3, **dadurch gekennzeichnet, dass** zur Herstellung der Suspension des Celluloseethers in einem organischen Lösungsmittel Aceton, Diethylether oder dessen höhere Homologe, Dimethoxyethan oder dessen höhere Homologe, aliphatische oder cyclische Kohlenwasserstoffe sowie aromatische Verbindungen eingesetzt werden.

5. Verfahren gemäß mindestens einem der vorangehenden Ansprüche, **dadurch gekennzeichnet, dass** die erhaltene Mischung gleichzeitig mit der Trocknung oder anschließend einer Mahlung unterworfen wird.

6. Verfahren gemäß Anspruch 5, **dadurch gekennzeichnet, dass** die Temperatur, der der Celluloseether im Verlauf der Trocknung und/oder Mahlung unterworfen wird, mindestens 60 °C beträgt.

## Claims

1. A process for physically modifying cellulose ethers, **characterized in that** a cellulose ether having a moisture content of from 30 to 75 % is mixed intensively, at temperatures of from 20 to 100°C, with from 0.1 to 2 % by weight, based on the dry cellulose ether, of an additive or an additive mixture in the form of an aqueous or organic suspension or solution, and the resulting mixture is subsequently dried, whereby the additive employed comprises natural and synthetic polymers based on homopolymers or copolymers based on polyvinyl acetate, vinyl acetate-maleate copolymers, ethylene-vinyl acetate copolymers, polyurethanes, and also mixtures thereof.

2. The process as claimed in claim 1, **characterized in that** the cellulose ether employed is methyl cellulose, ethyl cellulose, propyl cellulose, butyl cellulose, carboxymethyl cellulose, hydroxyethyl cellulose, methylhydroxyethyl cellulose, methylhydroxypropyl cellulose and/or ethylhydroxyethyl cellulose.

3. The process as claimed in at least one of claims 1 to 2, **characterized in that** the water-moist cellulose ether having a moisture content of from 30 to 75 % is initially suspended in an organic solvent before it is mixed, at temperatures of from 20 to 60°C, with an aqueous or organic suspension or solution of an additive or an additive mixture, and the organic suspending agent is separated off before the drying.

4. The process as claimed in claim 3, **characterized in that** acetone, diethyl ether or its higher homologs, dimethoxyethane or its higher homologs, aliphatic or cyclic hydrocarbons and aromatic compounds are used for preparing the suspension of the cellulose ether in an organic solvent.

5. The process as claimed in at least one of the preceding claims, **characterized in that** the resulting mixture is subjected to grinding, at the same time as the drying or following it.

6. The process as claimed in claim 5, **characterized in that** the temperature to which the cellulose ether is subjected during the course of the drying and/or grinding is at least 60 °C.

## Revendications

1. Procédé pour la modification physique d'éthers cellulosiques, **caractérisé en ce qu'**on mélange intensément un éther cellulosique présentant une teneur en humidité de 30 à 75 % avec 0,1 à 2 % en masse, par rapport à l'éther cellulosique anhydre, d'un additif ou d'un mélange d'additifs sous forme d'une suspension ou d'une solution aqueuse ou organique, à une température de 20 à 100°C, et ensuite on sèche le mélange obtenu, dans lequel on utilise en tant qu'additifs des polymères naturels ainsi que synthétiques à base d'homo- et/ou copolymère à base de poly(acétate de vinyle), des copolymères d'acétate de vinyle-maléate, des copolymères d'éthylène-acétate de vinyle, des polyuréthanes ainsi que des mélanges de ces matières.

2. Procédé selon la revendication 1, **caractérisé en ce qu'**on utilise en tant qu'éther cellulosique la méthylcellulose, l'éthylcellulose, la propylcellulose, la butylcellulose, la carboxyméthylcellulose, l'hydroxyéthylcellulose, la méthylhydroxyéthylcellulose, la méthylhydroxypropylcellulose et/ou l'éthylhydroxyéthylcellulose.

3. Procédé selon au moins l'une des revendications 1 à 2, **caractérisé en ce qu'**on suspend l'éther cellulosique humide présentant une teneur de 30 à 75 % en humidité, d'abord dans un solvant organique, avant qu'il soit mélangé avec une suspension ou solution aqueuse ou organique d'un additif ou d'un mélange d'additifs, à une température de 20 à 60°C, et on sépare l'agent de suspension organique avant le séchage.

4. Procédé selon la revendication 3, **caractérisé en ce qu'**on utilise pour la préparation de la suspension de l'éther cellulosique dans un solvant organique l'acétone, l'éther diéthylique ou ses homologues supérieurs, le diméthoxyéthane ou ses homologues supérieurs, des hydrocarbures aliphatiques ou cycliques ainsi que des composés aromatiques.

5. Procédé selon au moins l'une des revendications précédentes, **caractérisé en ce que** le mélange obtenu est soumis en même temps que le séchage, ou après, à un broyage.

6. Procédé selon la revendication 5, **caractérisé en ce que** la température à laquelle est soumis l'éther cellulosique au cours du séchage et/ou broyage, s'élève à au moins 60°C.
